Europäisches Patentamt

European Patent Office

Office européen des brevets

(11) Numéro de publication: **0 156 750**
**A1**

## (12) DEMANDE DE BREVET EUROPEEN

(21) Numéro de dépôt: 85440014.0

(22) Date de dépôt: 22.02.85

(51) Int. Cl.⁴: **B 29 C 47/02**
B 29 C 67/22, B 29 C 67/14
B 29 C 39/10, B 65 D 19/40
//B29K25:00, B29K105:04,
B29K105:06

(30) Priorité: 24.02.84 FR 8402994
15.06.84 FR 8409539

(43) Date de publication de la demande:
02.10.85 Bulletin 85/40

(84) Etats contractants désignés:
AT BE CH DE FR GB IT LI LU NL

(71) Demandeur: **CONTAPAL PATENT AG**
**Industriestrasse 31**
**CH-6300 Zug 3(CH)**

(72) Inventeur: **Reeber, Marcel**
**17, rue du Général de Gaulle**
**F-67310 Wasselonne(FR)**

(74) Mandataire: **Nuss, Pierre**
**10, rue Jacques Kablé**
**F-67000 Strasbourg(FR)**

(54) Corps à base de polystyrène armé et procédé de réalisation d'un tel corps.

(57) La présente invention concerne un corps à base de polystyrène armé et un procédé de réalisation d'un tel corps.

Corps caractérisé en ce qu'il est muni d'au moins une armature avantageusement tubulaire (1) entourant extérieurement sa masse (2) afin d'assurer la protection de cette derniére contre les chocs, ou intégrée dans ladite masse (2), cette armature étant, de préférence, constituée par un tube rigide.

L'invention est plus particulièrement applicable dans le domaine de la fabrication de plots pour palettes ou de calage.

Fig.1

Croydon Printing Company Ltd.

CONTAPAL PATENT AG
Industriestrasse 31, CH-6300 ZUG 3 (CH)

Corps à base de polystyrène armé et procédé de réalisation
d'un tel corps

La présente invention concerne le domaine de la
fabrication de pièces en polystyrène, en particulier pour
supporter des charges, notamment comme plots de palettes,
et a pour objet un corps à base de polystyrène armé.

L'invention a également pour objet un procédé de
réalisation d'un tel corps.

Actuellement, des corps à base de polystyrène
sous forme de plots moulés sont utilisés couramment pour
la fabrication de palettes légères ou pour le calage.
En effet, de tels plots présentent un très faible poids
et permettent ainsi une réduction très sensible du poids
des palettes qui en sont équipées.

Cependant, les palettes de ce type présentent
une limite de charge relativement faible due à la faible
résistance à la compression des plots, et ne peuvent être
utilisées pour des charges relativement lourdes.

La présente invention a pour but de pallier ces
inconvénients.

Elle a, en effet, pour objet un corps à base de
polystyrène, caractérisé en ce qu'il est muni d'au moins
une armature avantageusement tubulaire, entourant extérieurement sa masse afin d'assurer la protection de cette
dernière contre les chocs, ou intégrée dans ladite masse,

cette armature étant, de préférence, constituée par un
tube rigide.

L'invention a également pour objet un procédé
de réalisation d'un corps à base de polystyrène caractérisé en ce qu'il consiste à introduire l'armature dans
un moule et à remplir ledit moule de billes de polystyrène
pré-expansées, puis à réaliser l'expansion finale et la
polymérisation de ces billes après fermeture du moule,
par chauffage.

L'invention sera mieux comprise grâce à la
description ci-après, qui se rapporte à des modes de
réalisation préférés, donnés à titre d'exemples non
limitatifs, et expliqués avec référence aux dessins
schématiques annexés, dans lesquels :

les figures 1 à 4 représentent en perspective, diverses
variantes de réalisation d'un corps conforme à l'invention ;

la figure 5 est une vue en élévation latérale et en
coupe d'un dispositif mis en oeuvre pour la réalisation
d'un corps conforme à l'invention, et

la figure 6 est une vue en perspective d'une autre
variante de réalisation de l'invention.

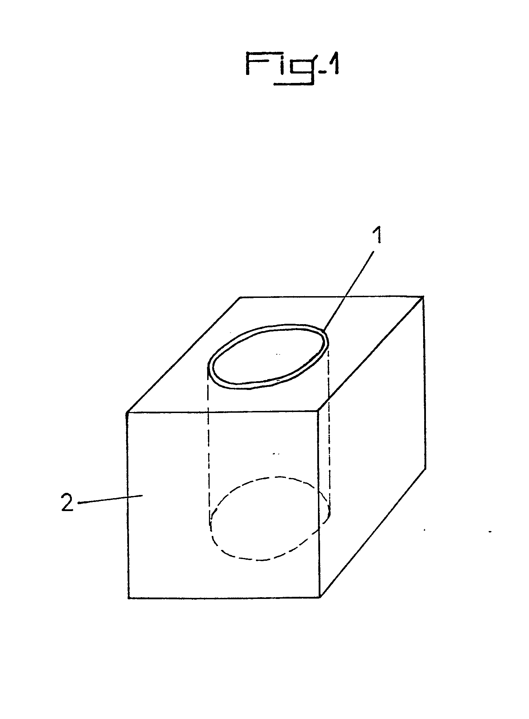

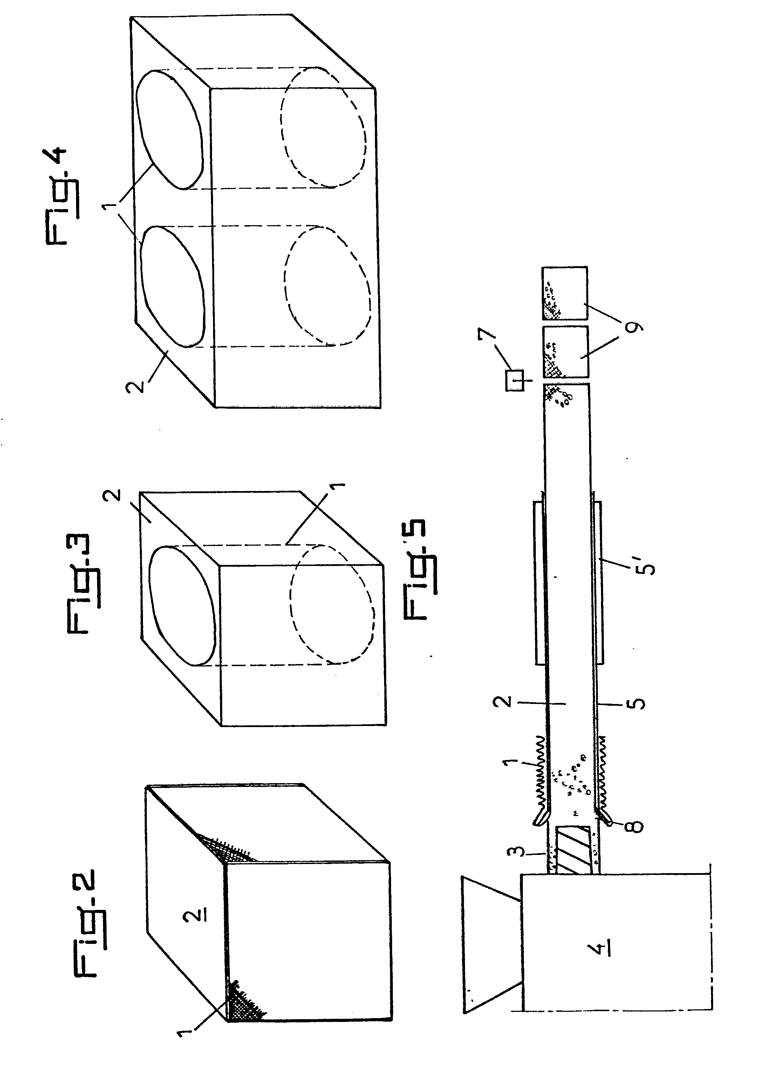

Comme le montrent plus particulièrement à titre
d'exemple, les figures 1 à 4 des dessins annexés, le
corps à base de polystyrène est muni, conformément à
l'invention, d'une armature 1, qui peut soit être intégrée
dans la masse 2 (figures 1, 3 et 4), soit entourer ladite
masse 2 (figure 2). Dans la variante de réalisation
représentée à la figure 4, deux armatures 1 sont intégrées dans la masse 2.

L'armature 1, qui est avantageusement tubulaire,
est de préférence, constituée par un tube rigide en
matière synthétique, telle que du chlorure de polyvinyle,
ou encore en métal ou autre matière rigide.

Une telle armature 1 permet une bonne imbrication
dans la masse 2 du corps en cas d'intégration dans cette
dernière (figures 1, 3 et 4), ou encore un bon maintien
de cette masse 2 sous un effort de compression (figure 2).
En outre, dans ce dernier cas, l'armature 1 protège la
masse 2 contre les chocs, notamment de fourches de dispositifs de manutention.

Le procédé de réalisation d'un tel corps consiste
à introduire l'armature dans un moule et à remplir ledit
moule de billes de polystyrène pré-expansées, puis à
réaliser l'expansion finale et la polymérisation de ces
billes, après fermeture du moule, par chauffage.

Il est également possible de réaliser l'armature
1 en un tissu en matière synthétique à mailles relativement fines, ou encore en un tissu métallique (figure 2).

Dans un tel cas, la réalisation du corps
s'effectue par extrusion de billes de polystyrène 2 à
travers la tête d'extrusion 3 d'une presse 4 dans une
armature 1, qui se dévide à travers une ouverture d'introduction dans un gabarit de formage et de polymérisation
5 à une vitesse qui correspond à la vitesse d'extrusion.
A la sortie du gabarit 5, l'ébauche obtenue et refroidie
dans la partie de refroidissement 5' est découpé en
éléments indépendants 9, au moyen d'un dispositif 7 de
tronçonnage à lame chauffante, ou autre (figure 5).
De manière connue, un tel dispositif de tronçonnage est
réglé pour permettre la coupe à la cadence d'extrusion.

Ainsi, lors de l'extrusion, la masse de formation 2 entraîne l'armature 1 à travers le gabarit 5 en
traversant les mailles de cette dernière ou en s'appliquant contre la face interne de l'armature 1. En effet,
en fonction de la grosseur des mailles, la masse en formation traversera l'armature 1, de manière à l'intégrer
totalement (cas des figures 1, 3 et 4) ou ne traversera pas l'armature 1, qui servira alors simultanément de protection externe (figure 2), cette armature 1 étant en tout cas, solidarisée avec la masse 2.

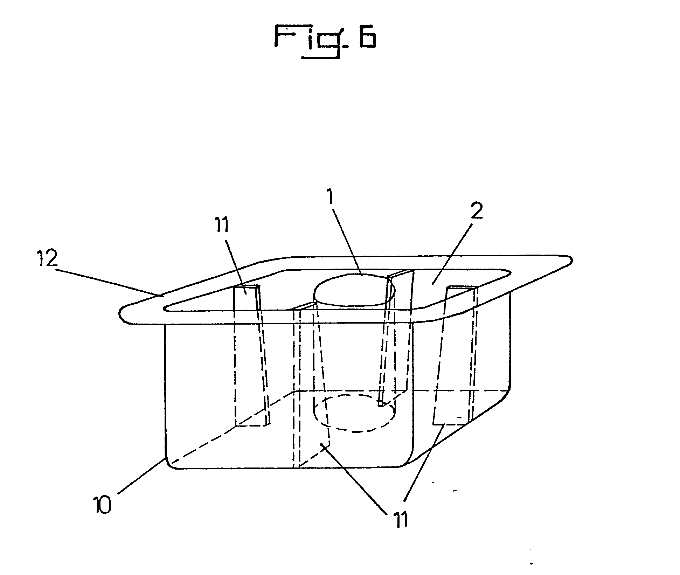

Conformément à une variante de réalisation de l'invention, et comme le montre la figure 6, le corps, constitué par une masse 2 à base de polystyrène et par une armature 1 intégrée dans ladite masse, est entouré par une gaine rigide 10 à paroi mince, qui est destinée à assurer une protection contre les chocs et les agents chimiques, en particulier contre les solvants.

La gaine rigide 10 présente avantageusement une forme de pot recevant l'armature 1 et les micro-billes à expanser formant la masse 2.

Afin de garantir une bonne liaison entre la masse 2 et la gaine 10, cette dernière est munie de nervures 11 assurant, en outre, le raidissage des parois de ladite gaine 10. La partie supérieure ouverte de la gaine 10 est pourvue d'un rebord circonférentiel 12, s'étendant vers l'extérieur et permettant d'augmenter la surface d'application et de collage du corps.

La gaine 10 est avantageusement réalisée en chlorure de polyvinyle rigide et est moulée par injection.

Grâce à ce mode de réalisation, il est possible d'obtenir un corps, de faible poids et d'un bas prix de revient, pouvant être utilisé comme plot de palette de manutention et pouvant supporter des charges notablement plus élevées que les plots de même nature existant actuellement. En outre, la fabrication de la gaine 10 en chlorure de polyvinyle rigide permet d'assurer une bonne tenue du corps aux chocs et aux agents chimiques, en particulier aux solvants.

En outre, l'armature 1, de préférence sous forme d'un tube rigide, assure une importante reprise de charge sans alourdissement notable du corps.

Grâce à l'invention, il est possible de réaliser des blocs armés à base de polystyrène, en particulier pour palettes de manutention, permettant une augmentation importante de la limite de charge du fait d'une résistance dynamique et d'une résistance statique, notablement accrues.

Bien entendu, l'invention n'est pas limitée aux modes de réalisation décrits et représentés aux dessins annexés. Des modifications restent possibles, notamment du point de vue de la constitution du corps et de l'armature, sans sortir pour autant du domaine de protection de l'invention.

- R E V E N D I C A T I O N S -

1. Corps à base de polystyrène, caractérisé en ce qu'il est muni d'au moins une armature avantageusement tubulaire (1) entourant extérieurement sa masse (2) afin d'assurer la protection de cette dernière contre les chocs, ou intégrée dans ladite masse (2), cette armature étant, de préférence, constituée par un tube rigide.

2. Corps suivant la revendication 1, caractérisé en ce que le tube rigide constituant l'armature (1) est avantageusement constitué en matière synthétique rigide telle que du chlorure de polyvinyle, en métal, ou autre matière rigide.

3. Procédé de réalisation d'un corps à base de polystyrène, suivant l'une quelconque des revendications 1 et 2, caractérisé en ce qu'il consiste à introduire l'armature dans un moule et à remplir ledit moule de billes de polystyrène pré-expansées, puis à réaliser l'expansion finale et la polymérisation de ces billes après fermeture du moule, par chauffage.

4. Procédé de réalisation d'un corps à base de polystyrène, comportant une armature flexible en tissu de matière synthétique, ou en tissu métallique, caractérisé en ce qu'il consiste essentiellement à extruder des billes de polystyrène (2) à travers la tête d'extrusion (3) d'une presse (4) dans au moins une armature tubulaire (1) se dévidant à une vitesse égale à la vitesse d'extrusion à travers un gabarit de formage et de polymérisation (5) comportant une partie de refroidissement près de sa sortie, et à découper l'ébauche (6) obtenue au moyen d'un dispositif de tronçonnage (7).

5. Dispositif pour la mise en oeuvre du procédé suivant la revendication 4, caractérisé en ce qu'il est constitué par une presse à extruder (4) munie d'une tête d'extrusion (3) prolongée par un gabarit de formage et de polymérisation (5) muni près de sa sortie d'une partie de refroidissement (5'), une ouverture (8) d'introduction d'au moins une armature tubulaire (1) étant prévue entre la tête (3) et le gabarit (5), et par un dispositif de tronçonnage (7).

6. Corps à base de polystyrène, suivant l'une quelconque des revendications 1 et 2, caractérisé en ce qu'il est entouré par une gaine rigide (10) à paroi mince assurant une protection contre les chocs et les agents chimiques, en particulier les solvants.

7. Corps, suivant la revendication 6, caractérisé en ce que la gaine rigide (10) présente avantageusement une forme de pot recevant l'armature (1) et les micro-billes à expanser formant la masse (2).

8. Corps, suivant l'une quelconque des revendications 6 et 7, caractérisé en ce que, afin de garantir une bonne liaison entre la masse (2) et la gaine (10), cette dernière est munie de nervures (11) assurant, en outre, le raidissage des parois de ladite gaine (10).

9. Corps, suivant l'une quelconque des revendications 6 à 8, caractérisé en ce que la partie supérieure ouverte de la gaine (10) est pourvue d'un rebord circonférentiel (12), s'étendant vers l'extérieur et permettant d'augmenter la surface d'application et de collage du corps.

10. Corps, suivant l'une quelconque des revendications 6 à 9, caractérisé en ce que la gaine (10) est avantageusement réalisée en chlorure de polyvinyle rigide et est moulée par injection.

# Fig-1

Fig.4

Fig.3

Fig.2

Fig.5

0156750

Fig. 6

Office européen
des brevets

**RAPPORT DE RECHERCHE EUROPEENNE**

**0156750**

Numéro de la demande

EP 85 44 0014

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | US-A-3 520 008 (FRIEDER)<br>* Figures 1-6; colonne 2, ligne 58 - colonne 3, ligne 4 * | 1-3 | B 29 C 47/02<br>B 29 C 67/22<br>B 29 C 67/14<br>B 29 C 39/10<br>B 65 D 19/40 //<br>B 29 K 25/00<br>B 29 K 105/04<br>B 29 K 105/06 |
| X | GB-A- 791 107 (ELLERBROCK)<br>* En entier * | 1-3 | |
| X | FR-A-1 578 553 (ZIPPEL)<br>* Figures 6-10; revendications * | 1,4,5 | |
| X | FR-A-2 022 260 (ZEYEN)<br>* Figures 4-8; revendications * | 1,6-8 | |
| X | US-A-4 140 295 (DALEY)<br>* Figure 2 * | 1,6 | |
| A | FR-A-2 193 739 (OWENS ILLINOIS)<br>* En entier * | 6 | **DOMAINES TECHNIQUES RECHERCHES (Int. Cl.4)**<br><br>B 29 C |
| A | US-A-3 804 032 (BAUCOM)<br>* Figures; colonne 3, lignes 61-65 * | 9,10 | |
| A | US-A-3 438 342 (WOOLWORTH)<br>* En entier * | 9 | |
| A | GB-A-1 362 075 (ILLINGWORTH)<br>* Figures 5,6 * | 9 | |

-----

Le présent rapport de recherche a été établi pour toutes les revendications

| Lieu de la recherche<br>LA HAYE | Date d'achèvement de la recherche<br>31-05-1985 | Examinateur<br>KUSARDY R. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82